# EUROPEAN PATENT APPLICATION

(11) **EP 4 660 043 A1**
(43) Date of publication of application: **10.12.2025**
(21) Application number: 25179236.2
(22) Date of filing: 27.05.2025
(51) Int. Cl.: B60W 50/08, B60W 50/00, B60K 35/10, B60K 35/80, B60R 16/023

(54) **A METHOD FOR PROVIDING AN ECONOMIC MODE FOR SAVING ENERGY IN A MOTOR VEHICLE, ADAPTED TO DRIVER HABITS, AND A VEHICLE IMPLEMENTING SUCH A METHOD**

(30) Priority: 28.05.2024 EP 24178357
(71) Applicant: VOLVO TRUCK CORPORATION, 405 08 Göteborg (SE)
(72) Inventor: BRUN, Arnaud, 69007 Lyon (FR); QUIBRIAC, Yann, 69007 Lyon (FR); SEVENIER, Fanette, 69690 Courzieu (FR)
(74) Representative: Germain Maureau

(57) **Abstract**

The present disclosure relates to a method of managing an economic mode for saving energy in a motor vehicle, the method comprising: detecting interactions of a driver of the vehicle with control elements (CMDi) of a vehicle control interface (UI); acquiring data (SECi) related to conditions of the vehicle when an interaction on one of the control elements is detected; determining conditions (CECj) associated with the control elements, based on the detected interactions and the acquired data, each condition being related to a state, a position and/or an external condition of the vehicle when the interaction is detected; storing a list (LEC) containing each condition determined for a control element; when the economic mode (ECO) is activated, determining control elements to be deactivated, based on the condition associated with each control element identifier in the list, and deactivating each of the control elements determined to be deactivated.

## Description

### TECHNICAL FIELD

The present disclosure relates to the field of energy saving in a motor vehicle. In particular aspects, the disclosure relates to a computer-implemented method to save energy consumed in a motor vehicle. The method can be applied more particularly to heavy-duty vehicles, such as trucks, buses, and construction equipment, having an internal combustion engine and/or an electric engine. However, the method is not restricted to any particular motor vehicle.

### BACKGROUND

Saving vehicles energy could improve autonomy of the vehicle, both in driving or in living conditions. Many functions are installed in vehicles, but depending on the driver habits, some functions are sometimes never used or used only in specific conditions depending for example on the type of road, external temperature, location, etc. For example, such functions may be used only on a highway, only when the external temperature is below 10°, or only on specific location areas.

Besides, many vehicles are equipped with an economic mode, or "ECO" mode, that the driver can activate or deactivate to save energy thanks to an "ECO" switch, i.e. electricity or fuel. However generally, the ECO mode is coupled to the control of the vehicle engine to reduce fuel consumption by limiting accelerations of the vehicle or torque applied to the wheels and controlling the gear box to keep the engine running efficiently. In some vehicles, the ECO mode may also be coupled to the air conditioning and climate control system to reduce a compressor load or cycle the compressor less frequently.

There is a need for increasing the energy that can be saved within a motor vehicle.

### SUMMARY

The present disclosure is related to a method of managing an economic mode for saving energy in a motor vehicle, the method being performed by processing circuitry in the vehicle and comprising: detecting interactions of a driver of the vehicle with control elements of a vehicle control interface; acquiring data related to a state, position and external conditions of the vehicle when an interaction of the driver on one of the control elements is detected; determining for each control element of the vehicle control interface, a condition associated with the control element, based on the acquired data when an interaction of the driver on the control element is detected, each condition being related to a state, a position and/or an external condition of the vehicle when the control element is activated by the driver; storing a list of control element identifiers, in which each control element identifier of one of the control elements is associated with the condition determined for the control element; and when the economic mode is activated, determining identifiers of control elements to be deactivated, based on the condition associated with each control element identifier in the list, and deactivating each of the control elements corresponding to the control element identifiers determined to be deactivated.

In this manner, the energy available in the vehicle can be saved and the lifetime of the deactivated control elements can be extended. In addition, the driver habits are taken into account to deactivate the control elements of the vehicle control interface in the ECO mode.

According to an embodiment, the method further comprises, when the economic mode is deactivated by the user, activating each control element identified in the list.

According to an embodiment, the method further comprises updating the condition associated with a control element identified in the list as a function of the actions of the driver on the control element and the acquired data.

In this manner, the evolution of the driver habits is taken into account to deactivate the control elements of the vehicle control interface in the ECO mode.

According to an embodiment, a condition associated with a control element identified in the list is stored or updated in the list only when no data related to an interaction of the driver on the control element are acquired for a predetermined time.

According to an embodiment, the vehicle control interface comprises a control element set of one or more control elements controlling a same function or system of the vehicle, the method further comprising: determining when the economic mode is activated, that each control element of the control element set are deactivated, and deactivating the function or system; and when the economic mode is deactivated, activating the function or system.

Thus the ECO mode is applied to function or systems of the vehicle that can consume more energy than a control element of the vehicle control interface.

According to an embodiment, the condition associated with each control element or function or system in the list is related to one or more of a type of road, a current time, a temperature out of the vehicle, a location of the vehicle, a speed of the vehicle, or is always met when the control element, function or system is never used by the driver.

According to an embodiment, the method further comprises: transmitting the list to a server; receiving by the server from vehicles of a vehicle fleet, lists of identifiers of control elements or functions or systems, each identifier in each list from a vehicle of the vehicle fleet being associated with a condition specifying when the control element, function or system corresponding to the identifier is never used by the driver of the vehicle of the vehicle fleet; generating by the server a new driver list containing identifiers of control elements, functions or systems, respectively associated with conditions, which are shared by the received lists from the vehicle fleet; and transmitting by the server to a vehicle of a new driver, the new driver list to specify control elements, functions or systems and associated conditions to be considered when the economic mode is activated in the vehicle of the new driver.

Thus the ECO mode can be activated on a new vehicle using the file generated by the server from driver's habits of drivers of the vehicle fleet, without having to wait for acquiring activations from a new driver.

According to an embodiment, the control elements of the first control element part of the vehicle control interface are energy consuming when they are activated and not activated by the driver.

Examples may also relate to a computer system for implementing an economic mode in a motor vehicle, the system being connected to control elements of a vehicle control interface and to devices providing data related to a state and position and external conditions of the vehicle, the system comprising processing circuitry configured to implement the method as previously defined.

Examples may also relate to a motor vehicle comprising control elements of a vehicle control interface, devices providing data related to a state and position and external conditions of the vehicle, and a system as previously defined.

Examples may also relate to a computer program product comprising program code for performing, when executed by a processing circuitry, the method as previously defined.

Examples may also relate to a non-transitory computer-readable storage medium comprising instructions, which when executed by a processing circuitry, cause the processing circuitry to perform the method as previously defined.

### BRIEF DESCRIPTION OF THE DRAWINGS

The foregoing and other purposes, features, aspects and advantages of the invention will become apparent from the following detailed description of embodiments, given by way of illustration and not limitation, with reference to the accompanying drawings, in which the same reference refer to similar elements or to elements having similar functions, and in which:
Figure 1 is an exemplary illustration of a vehicle according to one example;
Figure 2 is a perspective view of hardware components such as stalks located around the driving wheel of a vehicle according to an example.
Figure 3 is a view of other hardware components such as freewheel and switches located in a cabin of a vehicle to control a climate system, according to an example.
Figure 4 is a view of a software component in a cabin of a vehicle to control a climate system, according to an example.
Figure 5 is a block diagram of devices installed in the vehicle, according to an example;
Figure 6 is a flow chart of steps of a method for controlling an ECO mode in a vehicle, according to an example;
Figure 7 is a flow chart of steps of a method for controlling an ECO mode in a vehicle, according to an example;
Figure 8 is a schematic diagram of an exemplary computer system for implementing examples disclosed herein, according to an example.

### DETAILED DESCRIPTION

Aspects set forth below represent the necessary information to enable those skilled in the art to practice the inventive concept. The inventive concept may seek to improve energy saving in a motor vehicle.

The disclosure relates to a method providing an economic mode adapted to a driver in a vehicle. The method relies on monitoring and determining how the vehicle control interfaces or functionalities are used by the driver, depending on environmental or external conditions of the vehicle such as the type of road, the current time of the day or the year, and the environmental temperature, the position of the vehicle, and the state of the vehicle such as the speed of the vehicle, etc...

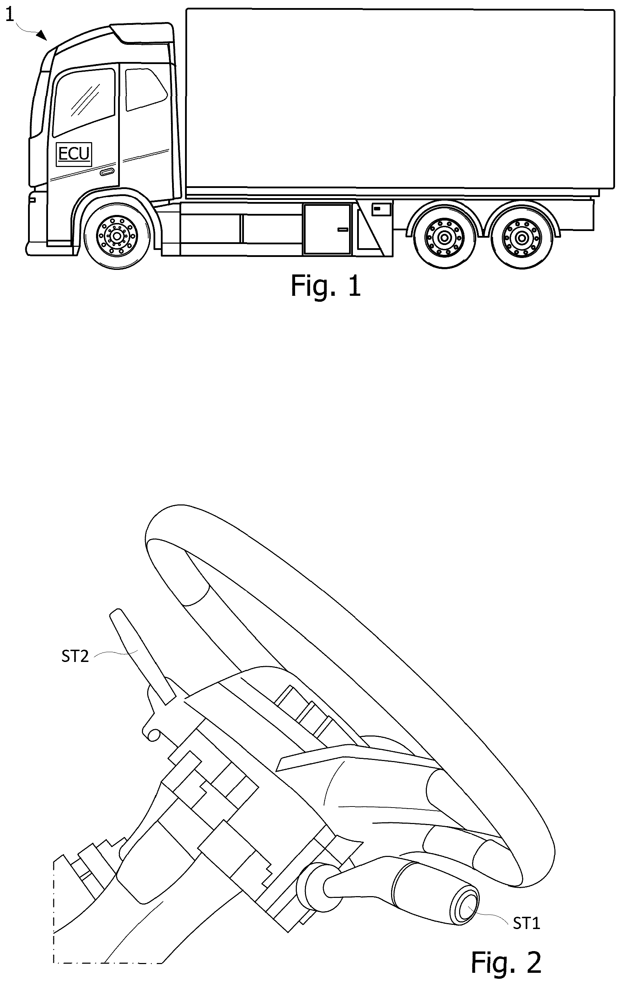

Figure 1 is an exemplary illustration of a vehicle 1 according to one example. The vehicle 1 in Figure 1 is exemplified as a truck, but the below described inventive concept may be provided in other vehicles, such as e.g. working machines, buses, cars, etc. The vehicle 1 comprises an internal combustion engine and/or an electrical engine 10, and a control unit ECU. The control unit ECU comprises a processor device configured to control devices installed in the vehicle, as will be described in further detail below. The control unit ECU is configured to provide an economic mode, i.e. an ECO mode, adapted to the driver of the vehicle, to reduce energy consumption and save energy, based on the usage of the driver. The driver has access to many different functions or services provided in the vehicle, through many different control elements, most of them being accessible by the driver in the cabin close to the driving wheel, such as rotary switches, i.e. freewheels, button switches, or stalks.

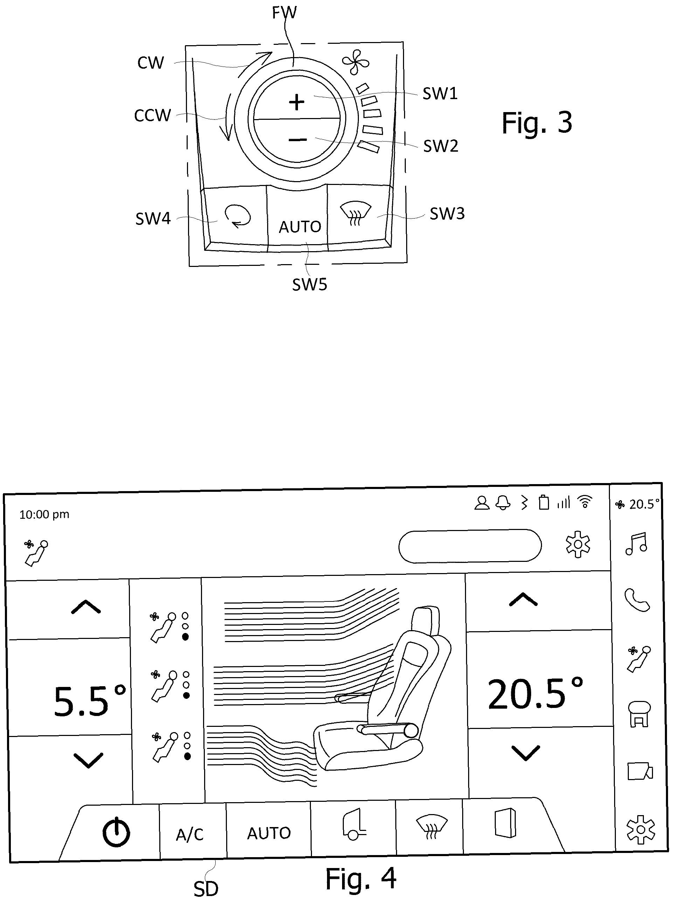

Figures 2, 3 and 4 show different control elements of a vehicle control interface configured to enable the driver of the vehicle to control systems and functions of the vehicle 1. Figure 2 shows a steering wheel of the vehicle and two stalks ST1, ST2 located around the steering wheel. The stalks ST1, ST2 may be used by the driver to activate turn indicators, or headlights. Figure 3 shows a freewheel FW and different switches SW1-SW5 designed to set the climate system settings, such as a fan speed which can be increased or decreased by turning the fan speed freewheel FW clockwise CW or counterclockwise CCW, or an internal temperature setting which can be increased or decreased by pressing respectively the switch SW1, or the switch SW2, or a windshield defrost mode which can be switched on by pressing the switch SW3, or an air recycling mode which can be switched on by pressing the switch SW4, and finally an automatic mode for configuring the climate system settings, which can be switched on by pressing the switch SW5. Some functions or systems may be activated through different vehicle control interfaces, either hardware control elements such as freewheels FW, switches SW1-SW5, or stalks ST1, ST2, or software applications which use for example on a touch display screen SD, as illustrated by figure 4 presenting a second climate settings interface, based on a software application displaying virtual switches on the display screen SD.

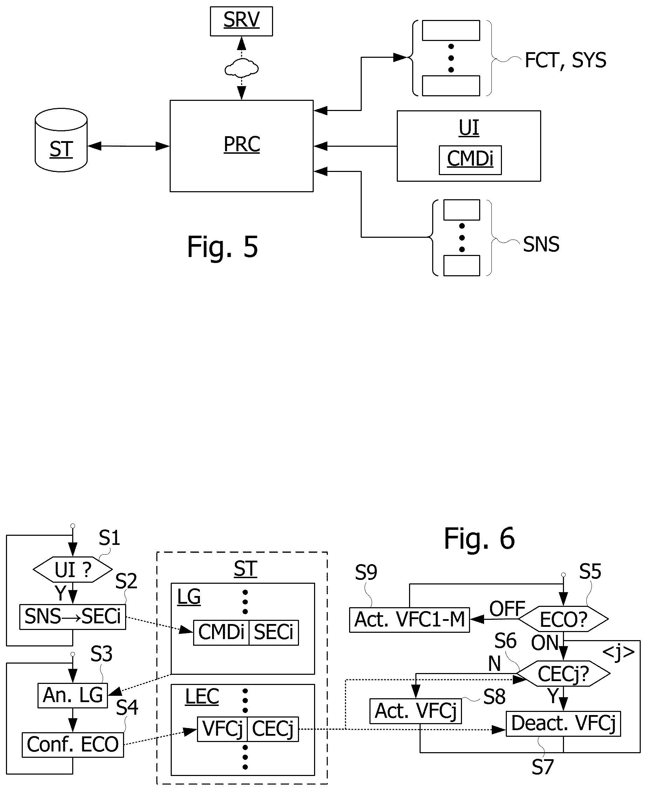

Figure 5 shows a processing system implementing the method providing an economic mode (or ECO mode) to reduce energy consumption and save energy, based on a usage of the driver, according to an example. The processing system is embedded in the vehicle 1 and comprises processing circuitry PRC connected to the vehicle control interface UI, a data storage unit ST, a set of sensors SNS and vehicle control interfaces of systems SYS and functions FCT in the vehicle 1. The vehicle control interface UI comprises control elements CMDi such as the freewheels FW, the switches SW1-SW5, the stalks ST1, ST2, and virtual buttons displayed on the touch display screen SD. The processing circuitry PRC can be a part of the control unit ECU of the vehicle 1.

Most of the control elements CMDi of the vehicle control interface UI are energy consuming, and an action of the driver on them can also consume energy. According to an example, at least some of the control elements of the vehicle control interface can be set individually or by groups in a deactivated mode in which an action of the driver on the control element has not effect, and the control element can be powered off.

For example, an inductive charger of a truck is consuming 60 mA when nothing is charging. A living environment control module is consuming 50 mA when not used. A passenger door control circuit and control panel is consuming 35m A. If the vehicle does not transport a passenger these devices are not needed. A freewheel is consuming 10 mA. An AC compressor is consuming 2 A. A rear camera is consuming 125 mA when not used. When 3A are saved at 24 V of power supply, this corresponds to 72 W per hour. Besides a saving of 100 W save 300L of diesel over distance of one millions of km. In addition to energy saving, the lifetime of a device is increased when it is not powered. Therefore, it is desirable to deactivate (i.e. switch off power supply of) devices embedded in a motor vehicle to save energy.

Figure 6 shows steps S1-S8 of the method providing the ECO mode. In step S1, the processing circuitry PRC continuously monitors the vehicle control interface UI to detect an action of the driver on one of the control elements of the vehicle control interface Ul. Step S2 is carried out when the driver actuates a control element CMDi. In step S2, the processing circuitry PRC acquires data related to a state and position of the vehicle and external conditions of the vehicle e.g., from the set of sensors SNS and other devices embedded in the vehicle, and writes an identifier of the control element CMDi with the data acquired in a log file LG in the storage unit ST. The state of the vehicle may be directed for example to the speed of the vehicle, the gear, the moving direction - forward or reverse of the vehicle, whether the vehicle is stopped. The position of the vehicle can be provided by a GNSS (Global Navigation Satellite System) receiver. The external conditions may relate to the environmental temperature and luminosity, the weather conditions (rain, snow, fog).

Steps S3 and S4 can be carried out by the processing circuitry PRC in parallel with steps S1 and S2 or when a new record is written in the log LG. In step S3, the processing circuitry PRC analyzes the log LG to determine for each control element CMDi identifier appearing in the log, conditions CECi in which the control element CMDi is not used by the driver (i being an integer varying from 1 to N, N being the number of control elements of the vehicle control UI).

The conditions CECi are determined from all the records found in the log LG containing the control element CMDi identifier, by analyzing the acquired data SECi in these records. In step S4, the processing circuitry PRC writes or updates a record in an ECO mode configuration file LEC from the log LG. the file LEC. The file LEC can comprise a record j for each control element CMDi and function or system of the vehicle 1 that can be deactivated in the ECO mode (j being an integer varying from 1 to M, M being the number of control elements of the vehicle control UI and functions or systems) of the vehicle 1, that can be deactivated in the ECO mode). Each record in the file LEC comprises an identifier VFCj of a device (control element CMDi or function or system) of the vehicle 1, an indicator specifying whether the device is to be deactivated in the ECO mode, and optionally conditions CECj that are to be met or not to deactivate the device in the ECO mode. If the processing circuitry PRC determines that a device VFCj of the vehicle 1 is never used or activated by the driver, no conditions are stored in the corresponding record. A function or system VFCj of the vehicle 1 can be configured in the file LEC to be deactivated in the ECO mode when all control elements CMDi controlling the function or system are to be deactivated in the ECO mode. The conditions CECj can be related for example to a current time of the day and year, a temperature out of the vehicle, a location of the vehicle, a speed of the vehicle, and a type of road on which the vehicle currently drives.

Thanks to the continuous monitoring performed by the processing circuitry PRC at step S1, if the driver starts using a device VFCj in a particular condition belonging to the corresponding conditions CECj, the processing circuitry PRC updates the record related to the device VFCj in the file LEC (step S4), so that the device is no more deactivated in the ECO mode when the vehicle 1 is in the particular condition.

According to an example, the processing circuitry PRC writes or updates a condition CECj in the file LEC only if the condition is not modified by a related new record (related to the same control element) in the log LG for a predetermined time or takes into account an event in the log only after the predetermined time from the occurrence of the event, provided that no new related event occurs during the predetermined time after the event.

According to an example, the continuous monitoring performed by the processing circuitry PRC in steps S1-S4 is also applied to functions and systems of the vehicle, such that the log LG also contains records related to those systems and functions, and thus contains records on devices VFCj.

Steps S5-S9 are performed when the driver actuates the ECO switch in the vehicle control interface Ul. Step S5 is triggered when the driver actuates the ECO switch. If the switch ECO is set to ON, the processing circuitry PRC performs step S5 where it acquires the data from the set of sensors SNS and reads successively each record of the file LEC. For each record j of the file LEC, the processing circuitry PRC determines at step S6 if the device VFCj can be deactivated in the ECO mode. If device VFCj can be deactivated in the ECO mode, the processing circuitry PRC deactivates the device VFCj at step S7 if the record j does not have conditions CECj or if the conditions CECj are met from the data received from the sensors SNS. The deactivation of device VFCj at step S7 can include the deactivation of the communication between the device and the processing unit PRC, which can be performed using a bus CAN (Controller Area Network) or LIN (Local Interconnect Network). If at step S6, the conditions CECj are not met or no more met, the processing circuitry PRC activates the device VFCj. If at step S5 the switch ECO is set to OFF, the processing circuitry PRC performs step S9 where it activates all the deactivated devices VFCj.

According to an example, a defrost button VFRj is memorized in the file LEC to be deactivated in the ECO mode because the processing circuitry PRC identifies in the log LG that the driver does not use the defrost button in the condition CECj according to which the external temperature is below 10°C or uses this button only when the external temperature is above 10°C. In this case, the processing circuitry PRC determined in step S3 that all the records in the log LG related to the defrost button store an external temperature above 10°C. If the ECO mode is set and if the external temperature is below 10°C, the defrost button is deactivated at step S7. If the defrost button is the only control element that activate/deactivate the defrost function, all devices related to the defrost function can be also deactivated (such as a windshield air fan, actuators used to redirect the air flow, etc.). If the ECO mode is set and if the external temperature is or passes above 10°C, the defrost button is activated at step S8.

According to an example, the vehicle control interface UI can comprise two ways to adjust climate settings: e.g., by means of the touch display screen SD, or by means of a hardware climate control element CMDi, such as physical freewheel. The processing unit PRC can be configured to identify in the log LG that the driver never uses the hardware climate control element. This hardware control element can be referenced in a record of the file LEC, so that when the ECO mode is activated, the hardware climate control element is deactivated. As long as the driver uses the touch display screen SD to adjust climate settings, the climate control system is not deactivated in the ECO mode. In contrast, if the driver also never uses the touch display screen SD to adjust climate settings, i.e. never use the climate control system in given conditions, this system is also deactivated in the ECO mode when the given conditions are met.

According to an example, the vehicle 1 comprises an inductive charger. The processing unit PRC identifies in the log LG at step S3 that the driver never uses the inductive charger while driving (vehicle speed > 0 or vehicle stopped). At step S4, the processing unit PRC update the record of the file LEC corresponding to the inductive charger to set the corresponding indicator so that the inductive charger is to be deactivated in the ECO mode and to set the corresponding conditions CECj to "the vehicle is driving". If the ECO mode is activated, the inductive charger is deactivated

According to an example, the vehicle control interface UI comprises a lot of switches on a dashboard, grouped in switches panels. The processing circuitry PRC identifies at step S3 in the log LG that the driver uses the switches in a panel n°2 only on urban roads. This condition can result from the log LG in which all the records related to the switches of the panel n°2 are associated with a vehicle speed below the authorized speed limit of the urban roads or with a position in an urban area or on a urban road. If the ECO mode is set and if the external temperature is below 10°C, the defrost button is deactivated at step S7. If the ECO mode is set and if the vehicle is on a urban road, the panel n°2 is deactivated at step S7, otherwise (the vehicle is on a highway), this panel is activated at step S8.

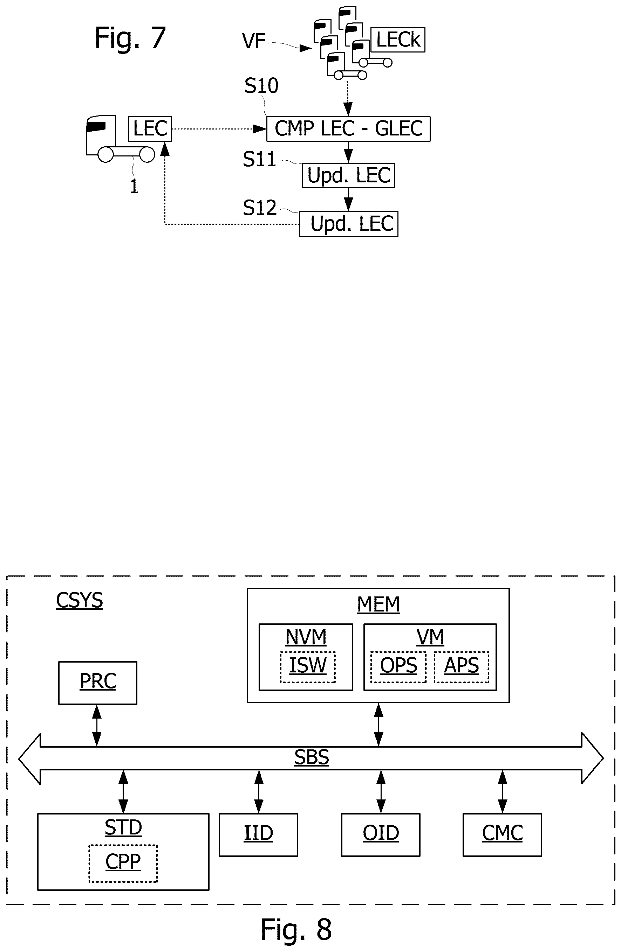

According to an example illustrated by figure 7, the files LECk generated by the processing circuitry PRC of each vehicle of a fleet of vehicles FL having similar devices VFCj in common are transmitted to a remote server SRV (Figure 5). The server SRV is configured to store the received files LECk and to analyze these files to generate a file GLEC corresponding to the habits which are shared by the drivers of the fleet FL, to be used to predict future habits of a new driver. The processing circuitry PRC of the vehicle 1 is configured to perform steps S10 to S12. At step S10, the processing circuitry PRC receives the file GLEC and compare the records of this file to the file LEC generated by processing circuitry PRC for the new driver of the vehicle 1. At step S11, processing circuitry PRC updates the file LEC of the vehicle 1 to include the records of the file GLEC. For example, the records from the file GLEC that are included in the file LEC are related to devices VFCj that are not already identified in the file LEC.

At step S12, processing circuitry PRC performs steps S1-S4 to update the file records of the file LECk according to the actions of the driver on the vehicle control interface UI and current conditions of the vehicle. The ECO mode can be activated for the first time using the file GLEC when a new driver drives a new vehicle. The conditions stored in the file LEC are updated from the file GLEC taking into account general driver's usage of a vehicle fleet, the records of the file LEC being related to devices of the vehicle that are not already listed or updated in the file LEC as a function of the previous driver actions on the vehicle control interface UI.

According to an embodiment, the vehicle is used by several different drivers. In that case, the processing circuitry PRC can provide a driver identification function inviting the driver to identify when he starts the vehicle. Further, the processing circuitry PRC can store a file LEC for each identified driver which is selected based on the driver identification performed by the driver identification function.

Figure 8 is a schematic diagram of a computer system CSYS for implementing the examples disclosed herein. The computer system CSYS is adapted to execute instructions from a computer-readable medium to perform these and/or any of the functions or processing described herein. The computer system CSYS may be connected (e.g., networked) to other machines in a LAN, an intranet, an extranet, or the Internet. While only a single device is illustrated, the computer system CSYS may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system CSYS may comprise at least one computing device or electronic device capable of including firmware, hardware, and/or executing software instructions to implement the functionality described herein. The computer system CSYS may include a processor device PRC (may also be referred to as a control unit), a memory MEM, and a system bus SBS. The computer system CSYS may include at least one computing device having the processor device PRC. The system bus SBS provides an interface for system components including, but not limited to, the memory MEM and the processor device PRC. The processor device PRC may include any number of hardware components for conducting data or signal processing or for executing computer code stored in memory MEM. The processor device PRC (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus SBS may be any of several types of bus structures that may further interconnect to a memory bus (with or without a memory controller), a peripheral bus, and/or a local bus using any of a variety of bus architectures. The memory MEM may be one or more devices for storing data and/or computer code for completing or facilitating methods described herein. The memory MEM may include database components, object code components, script components, or other types of information structure for supporting the various activities herein. Any distributed or local memory device may be utilized with the systems and methods of this description. The memory MEM may be communicably connected to the processor device PRC (e.g., via a circuit or any other wired, wireless, or network connection) and may include computer code for executing one or more processes described herein. The memory MEM may include non-volatile memory NVM (e.g., read-only memory (ROM), erasable programmable read-only memory (EPROM), electrically erasable programmable read-only memory (EEPROM), etc.), and volatile memory VM (e.g., random-access memory (RAM)), or any other medium which can be used to carry or store desired program code in the form of machine-executable instructions or data structures and which can be accessed by a computer or other machine with a processor device PRC. A basic input/output system (BIOS) ISW may be stored in the non-volatile memory NVM and can include the basic routines that help to transfer information between elements within the computer system CSYS.

The computer system CSYS may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA), HDD (e.g., EIDE or SATA) for storage, flash memory, or the like. The storage device STD and other drives associated with computer-readable media and computer-usable media may provide non-volatile storage of data, data structures, computer-executable instructions, and the like. A number of modules can be implemented as software and/or hard-coded in circuitry to implement the functionality described herein in whole or in part. The modules may be stored in the storage device STD and/or in the volatile memory VM, which may include an operating system OPS and/or one or more program modules APS. All or a portion of the examples disclosed herein may be implemented as a computer program product CPP stored on a transitory or non-transitory computer-usable or computer-readable storage medium (e.g., single medium or multiple media), such as the storage device STD, which includes complex programming instructions (e.g., complex computer-readable program code) to cause the processor device PRC to carry out the steps described herein. Thus, the computer-readable program code can comprise software instructions for implementing the functionality of the examples described herein when executed by the processor device PRC. The processor device PRC may serve as a controller or control system for the computer system CSYS that is to implement the functionality described herein.

The computer system CSYS also may include an input device interface IID (e.g., input device interface and/or output device interface). The input device interface IID may be configured to receive input and selections to be communicated to the computer system CSYS when executing instructions, such as from a keyboard, mouse, touch-sensitive surface, etc. Such input devices may be connected to the processor device PRC through the input device interface IID coupled to the system bus SBS but can be connected through other interfaces such as a parallel port, an Institute of Electrical and Electronic Engineers (IEEE) 1394 serial port, a Universal Serial Bus (USB) port, an IR interface, and the like. The computer system CSYS may include an output device interface OID configured to forward output, such as to a display, a video display unit (e.g., a liquid crystal display, LCD, or a cathode ray tube, CRT). The computer system CSYS may also include a communications interface CMC suitable for communicating with a network as appropriate or desired.

The above description of various examples is provided for purpose of description to one of ordinary skills in the related art. It is not intended to be exhaustive or to limit the scope of the present disclosure solely to the disclosed examples. Numerous alternatives or variations to the present disclosure will be apparent to those of ordinary skills in the related art. Accordingly, while some alternatives or examples have been presented specifically, other examples will be apparent or easily developed by those of ordinary skills in the related art. Limitations in the appended claims should be interpreted broadly based on the language used in the claims and such limitations should not be restricted to the specific examples described above.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method of managing an economic mode for saving energy in a motor vehicle (1), the method being performed by processing circuitry (PRC) in the vehicle and comprising:
detecting interactions of a driver of the vehicle with control elements (CMDi) of a vehicle control interface (UI);
acquiring data (SECi) related to a state, position and external conditions of the vehicle when an interaction of the driver on one of the control elements is detected;
determining for each control element of the vehicle control interface, a condition (CECj) associated with the control element, based on the acquired data when an interaction of the driver on the control element is detected, each condition being related to a state, a position and/or an external condition of the vehicle when the control element is activated by the driver;
storing a list (LEC) of control element identifiers (VFCj), in which each control element identifier of one of the control elements is associated with the condition (CECj) determined for the control element; and
when the economic mode (ECO) is activated, determining identifiers of control elements to be deactivated, based on the condition associated with each control element identifier in the list, and deactivating each of the control elements corresponding to the control element identifiers determined to be deactivated.

2. The method of claim 1, further comprising, when the economic mode is deactivated by the user, activating each control element identified in the list (LEC).

3. The method according to claim 1 or 2, further comprising updating the condition (CECj) associated with a control element (CMDi) identified in the list (LEC) as a function of the actions of the driver on the control element and the acquired data (SECi).

4. The method according to claim 3, wherein a condition (CECj) associated with a control element (CMDi) identified in the list (LEC) is stored or updated in the list only when no data related to an interaction of the driver on the control element are acquired for a predetermined time.

5. The method according to one of claims 1 to 4, wherein the vehicle control interface (UI) comprises a control element set of one or more control elements controlling a same function (FCT) or system (SYS) of the vehicle (1), the method further comprising:
determining when the economic mode (ECO) is activated, that each control element of the control element set are deactivated, and deactivating the function or system; and
when the economic mode is deactivated, activating the function or system.

6. The method according to one of claims 1 to 5, wherein the condition (CECj) associated with each control element or function or system (VFCj) in the list is related to one or more of a type of road, a current time, a temperature out of the vehicle, a location of the vehicle, a speed of the vehicle, or is always met when the control element, function or system is never used by the driver.

7. The method according to one of claims 1 to 6, further comprising:
transmitting the list (LEC) to a server (SRV);
receiving by the server from vehicles of a vehicle fleet (FL), lists (LEC) of identifiers of control elements or functions or systems, each identifier (VFCj) in each list from a vehicle of the vehicle fleet being associated with a condition (CECj) specifying when the control element, function or system corresponding to the identifier is never used by the driver of the vehicle of the vehicle fleet;
generating by the server a new driver list (GLEC) containing identifiers of control elements, functions or systems, respectively associated with conditions, which are shared by the received lists from the vehicle fleet (FL); and
transmitting by the server to a vehicle of a new driver, the new driver list to specify control elements, functions or systems and associated conditions to be considered when the economic mode is activated in the vehicle of the new driver.

8. The method according to one of claims 1 to 7, wherein the control elements (CMDi) of the first control element part of the vehicle control interface (UI) are energy consuming when they are activated and not activated by the driver.

9. A computer system for implementing an economic mode in a motor vehicle, the system being connected to control elements of a vehicle control interface (UI) and to devices providing data related to a state and position and external conditions of the vehicle, the system comprising processing circuitry (PRC) configured to implement the method of any one of claims 1 to 8.

10. A motor vehicle comprising control elements of a vehicle control interface (UI), devices providing data related to a state and position and external conditions of the vehicle, and a system (PRC) according to claim 9.

11. A computer program product comprising program code for performing, when executed by a processing circuitry (PRC), the method of any one of claims 1 to 8.

12. A non-transitory computer-readable storage medium comprising instructions, which when executed by a processing circuitry (PRC), cause the processing circuitry to perform the method of any one of claims 1 to 8.
